# EUROPEAN PATENT APPLICATION

(11) **EP 3 919 368 A1**
(43) Date of publication of application: **08.12.2021**
(21) Application number: 21158437.0
(22) Date of filing: 22.02.2021
(51) Int. Cl.: B63H 21/21, B63H 21/22

(54) **SYSTEM AND METHOD FOR CONTROLLING SPEED OF A MARINE VESSEL**

(30) Priority: 06.03.2020 US 202016811538
(71) Applicant: Brunswick Corporation, Mettawa, Illinois 60045 (US)
(72) Inventor: Nickols, Thomas F., Fond du Lac, WI 54935 (US)
(74) Representative: Håmsø Patentbyrå AS

(57) **Abstract**

The invention relates to a system (10) for a marine vessel including a controller (20) in signal communication with a marine propulsion device (12) and controlling operation of the marine propulsion device (12) to produce thrust to propel the marine vessel at a vessel speed. A user interface (46) receives user inputs and is in signal communication with the controller (20). A first sensor (40, 42) determines the vessel speed and is in signal communication with the controller (20). A second sensor (28, 32, 36, 40, 44) determines a non-speed condition of the marine vessel and is in signal communication with the controller (20). In response to a given user input from the user interface (46), the controller (20) controls operation of the marine propulsion device based on feedback from the first sensor (40, 42) to prevent the vessel speed from exceeding a maximum speed limit. The controller (20) reduces the maximum speed limit in response to determining that the non-speed condition of the marine vessel meets a predetermined criterion.

## Description

### FIELD

The present disclosure relates to marine vessels and marine vessel control systems.

### BACKGROUND

U.S. Patent No. 6,273,771 discloses a control system for a marine vessel that incorporates a marine propulsion system that can be attached to a marine vessel and connected in signal communication with a serial communication bus and a controller. A plurality of input devices and output devices are also connected in signal communication with the communication bus and a bus access manager, such as a CAN Kingdom network, is connected in signal communication with the controller to regulate the incorporation of additional devices to the plurality of devices in signal communication with the bus whereby the controller is connected in signal communication with each of the plurality of devices on the communication bus. The input and output devices can each transmit messages to the serial communication bus for receipt by other devices.

U.S. Patent No. 6,298,824 discloses a control system for a fuel injected engine providing an engine control unit that receives signals from a throttle handle that is manually manipulated by an operator of a marine vessel. The engine control unit also measures engine speed and various other parameters, such as manifold absolute pressure, temperature, barometric pressure, and throttle position. The engine control unit controls the timing of fuel injectors and the injection system and also controls the position of a throttle plate. No direct connection is provided between a manually manipulated throttle handle and the throttle plate. All operating parameters are either calculated as a function of ambient conditions or determined by selecting parameters from matrices which allow the engine control unit to set the operating parameters as a function of engine speed and torque demand, as represented by the position of the throttle handle.

U.S. Patent No. 6,485,341 discloses a method for controlling the average speed of a vehicle over a predetermined time period, or indefinitely, or distance length described with reference to selecting a desired average speed, measuring an actual speed, and maintaining a cumulative error determined as a function of the difference between the average speed and actual speed and the time over which the actual speed measurement was taken. Based on the cumulative total of speed-time error, a compensatory speed is calculated that will reduce the cumulative speed-time error to an acceptable tolerance range within a selected period of elapsed time. Although particularly applicable to competition situations in which an average speed is dictated for use over a particular competition course, the average speed controlling method can be used in other situations where the average speed of a vehicle must be controlled.

U.S. Patent No. 7,214,110 discloses an acceleration control system which allows the operator of a marine vessel to select an acceleration profile to control the engine speed of a marine vessel from an initial starting speed to a final desired speed. When used in conjunction with tow sports, such as wake boarding and water skiing, the use of acceleration profile provides consistent performance during the period of time when a water skier is accelerated from a stationary position to a full speed condition.

U.S. Patent No. 9,284,032 discloses a control system and method for deterring theft of a marine vessel. A security control circuit receives a transponder identification code from a transponder. The engine control circuit has a status that is based on a comparison of a stored identification code with the transponder identification code. The status of the engine control circuit is locked if the stored identification code does not match the transponder identification code and the status of the engine control circuit is unlocked if the stored identification code does match the transponder identification code. The security control circuit determines an arbitrated lock status of the control system based on a conjunctive analysis of the locked and unlocked statuses of a plurality of engine control circuits connected to a network bus, and indicates the arbitrated lock status to an operator of the marine vessel.

### SUMMARY

This Summary is provided to introduce a selection of concepts that are further described below in the Detailed Description. This Summary is not intended to identify key or essential features of the claimed subject matter, nor is it intended to be used as an aid in limiting the scope of the claimed subject matter.

The invention is defined by the independent claims. The dependent claims define advantageous embodiments.

According to one example, a system for a marine vessel includes a controller in signal communication with a marine propulsion device and controlling operation of the marine propulsion device to produce thrust to propel the marine vessel at a vessel speed. A user interface is configured to receive user inputs and in signal communication with the controller. A first sensor determines the vessel speed and is in signal communication with the controller. A second sensor determines a non-speed condition of the marine vessel and is in signal communication with the controller. In response to a given user input from the user interface, the controller is configured to control operation of the marine propulsion device based on feedback from the first sensor to prevent the vessel speed from exceeding a maximum speed limit. The controller is configured to reduce the maximum speed limit in response to determining that the non-speed condition of the marine vessel meets a predetermined criterion.

According to another example, a method for a marine vessel equipped with a marine propulsion device that produces thrust to propel the marine vessel is carried out by a controller in signal communication with the marine propulsion device and includes determining a speed of the marine vessel and determining a non-speed condition of the marine vessel. In response to a given user input, the method includes controlling operation of the marine propulsion device to prevent the vessel speed from exceeding a maximum speed limit. The method further includes reducing the maximum speed limit in response to determining that the non-speed condition of the marine vessel meets a predetermined criterion.

### BRIEF DESCRIPTION OF THE DRAWINGS

The present disclosure is described with reference to the following Figures. The same numbers are used throughout the Figures to reference like features and like components.
FIG. 1 is a schematic of a marine vessel control system according to the present disclosure.
FIG. 2 illustrates a method according to the present disclosure.

### DETAILED DESCRIPTION

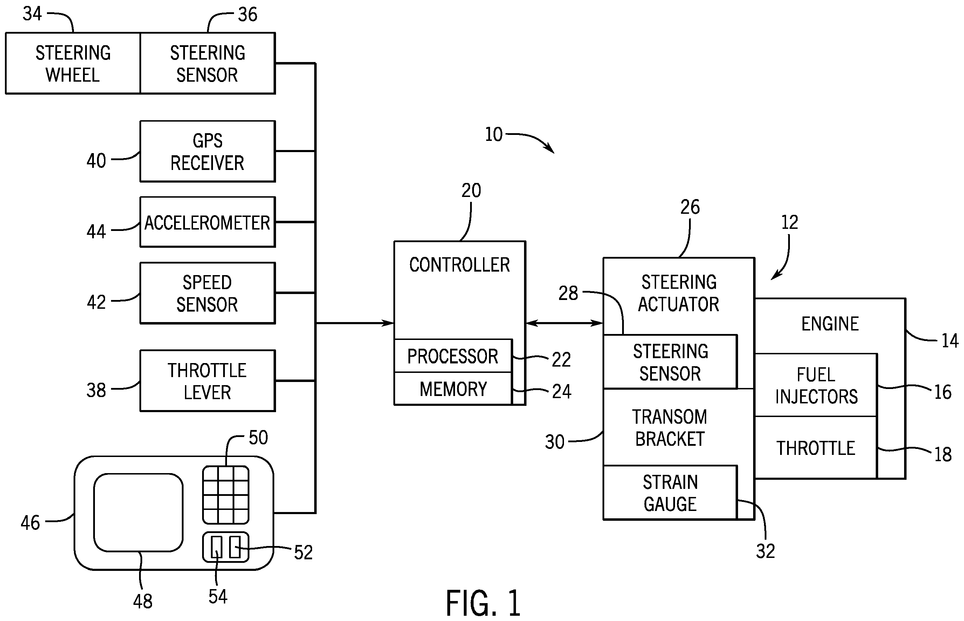

FIG. 1 is a schematic illustrating a system 10 for a marine vessel. The marine vessel could be a fishing boat, a deck boat, a bowrider boat, a catamaran boat, a personal watercraft, or any other small- to mid-size marine vessel used for pleasure, sport, or occupation. The system 10 includes a marine propulsion device 12 having a prime mover, such as an electric motor or internal combustion engine 14 (shown here). The engine 14 is coupled in torque transmission with a propulsor (such as a propeller, impeller, or the like) that produces thrust to propel the marine vessel through water. The engine 14 includes typical components, such as fuel injectors 16 and a throttle 18 for providing fuel and air, respectively, to combustion chambers in the engine 14. Internal combustion engines are well known in the art and will not be described further herein. Additionally, many ways to couple the engine 14 to the thrust-producing propulsor are well-known and thus will not be described more fully herein, other than to say the marine propulsion device 12 can be an outboard drive, a stern drive, a pod drive, an inboard drive, a pump-jet drive, or any other marine drive known in the art.

The system 10 also includes a controller 20 in signal communication with the marine propulsion device 12 and controlling operation of the marine propulsion device 12 to produce thrust to propel the marine vessel at a vessel speed. The controller 20 is programmable and includes at least a processor 22 and a memory 24. The controller 20 can be located anywhere on the marine vessel and can communicate with various components of the marine vessel via a peripheral interface and wired and/or wireless links. Although FIG. 1 shows one controller 20, the system 10 can include more than one controller.

In some examples, the controller 20 may include a computing system that includes a processing system (e.g., processor 22), storage system (e.g., memory 24), software, and input/output interfaces for communicating with peripheral devices. The processing system can comprise a microprocessor, including a control unit and a processing unit, and other circuitry, such as semiconductor hardware logic, that retrieves and executes software from the storage system. The processing system can include one or many software modules comprising sets of computer executable instructions for carrying out various functions as described herein.

The storage system can comprise any storage media readable by the processing system and capable of storing software that may be accessed by an instruction execution system. The storage system can include volatile and non-volatile, removable and non-removable media implemented in any method or technology for storage of information, such as computer-readable instructions, data structures, software program modules, or other data. The storage media can be a transitory storage media or a non-transitory storage media, such as a non-transitory tangible computer readable medium. The storage system can include additional elements, such as a memory controller capable of communicating with the processing system.

The controller 20 communicates with one or more components in the system 10 via the I/O interfaces and a communication link, which can be a wired or wireless link. The controller 20 is capable of monitoring and controlling one or more operational characteristics of the system 10 by sending and receiving control signals via the communication link. In one example, the communication link is a controller area network (CAN) bus, but other types of links could be used. It should be noted that the connections in the communication link shown herein are for schematic purposes only, and the communication link in fact provides communication between the controller 20 and each of the peripheral devices in the system 10 noted herein, although not every connection is shown in the FIG. 1 for purposes of clarity.

One of the peripheral devices in communication with the controller 20 is a steering actuator 26 for rotating a steerable component about a generally vertical steering axis to affect a direction of travel of the marine vessel. For example, if the marine propulsion device 12 is an outboard drive, the steering actuator 26 can be an electric or hydraulic actuator that is coupled to and configured to rotate the engine and propeller or impeller of the outboard drive about a vertical steering axis. In other examples, the steering actuator 26 is an electric, hydraulic, or pneumatic actuator that is coupled to and configured to move a propulsor, gearcase, nozzle, or other thrust-directing portion of the marine propulsion device 12. In still another example, the steering actuator 26 is coupled to and configured to rotate a rudder. Coupling between a power source and the steerable component can be made by way of a rack and pinion, a gear set, a piston and cylinder, or any other known assembly. The steering actuator 26 is equipped with a steering sensor 28 that determines a position of the steerable component about its steering axis. For example, the steering sensor 28 can be an LVDT, potentiometer, or other known type of sensor appropriate for the type of steerable component with which it is associated. The controller 20 receives a signal from the steering sensor 28 and is configured to determine a steered position of the steerable component based on this signal. In still another example, steering is accomplished manually by way of a tiller, in which case the steering sensor 28 may or may not be provided.

In the example in which the marine propulsion device 12 is an outboard motor, it may be coupled to a transom of the marine vessel by way of a transom bracket 30, as is known. The steering actuator 26 may also be supported by the transom bracket 30. In the present example, the system 10 includes a strain gauge 32 in signal communication with the controller 20. The strain gauge 32 may be an axial-configured gauge that measures strain in one principle direction or a shear-configured gauge that measures angular distortion resulting from torque or twisting. For example, the strain gauge 32 can be connected between the transom of the marine vessel and the transom bracket 30. The strain gauge 32 is waterproof and weldable. The controller 20 receives a signal from the strain gauge 32 and is configured to determine a strain on or between one or more components of the marine propulsion device 12 based on this signal.

Other peripheral devices are located at the operator's console (helm) of the marine vessel. A throttle lever 38 is provided for inputting signals to the controller 20 related to a requested direction of travel (forward or reverse) and speed of the marine vessel. The controller 20 may interpret signals from a sensor at the base of the throttle lever 38 as a request for a position of the throttle 18 on the engine 14 or as a request for a particular engine speed. In both cases, the controller 20 uses the signal from the throttle lever sensor to position the throttle 18 and/or to control fuel injection via the fuel injectors 16 in order to achieve the requested throttle position or engine speed. Such types of throttle position and engine speed control are well-known in the art and will not be described further herein. Rotation of a steering wheel 34 is sensed by a steering sensor 36, such as an analog sensor (e.g., potentiometer) or a digital contactless sensor. The steering sensor 36 is in signal communication with the controller 20, which is configured to convert the signal from the steering sensor 36 to a requested steering position of the steerable component, such as by way of a look-up table or other input-output map. The controller 20 then sends an output signal to the steering actuator 26 to steer the steerable component to the requested steering angle. The steering sensor 28 provides information that allows the controller 20 to determine whether the steerable component is at the requested steering position. This information can be used to further adjust the position of the steerable component, as in a closed-loop system, or alternatively, the steering system may be open-loop. In another example, the steering system is a manual system, and the steering wheel 34 is coupled to the steerable component by way of a push-pull cable.

The vessel's speed can be measured by a GPS receiver 40 or other speed sensor 42 (e.g., pitot tube, paddle wheel). The GPS receiver 40 and/or controller 20 in signal communication therewith can use the change in the vessel's global position over time to estimate the vessel's speed over ground. Information from the GPS receiver 40 can also be compared to known GIS map data and/or bathymetric data (stored in the memory 24 or accessed from a chartplotter) to determine if the marine vessel is operating in a particular geographical area and/or at what approximate depth. In one example, the GPS receiver 40 is part of an attitude and heading reference system (AHRS), which may also include one or more accelerometers 44.

The accelerometer(s) 44 may be three-axis angular accelerometers, the readings from which the controller 20 uses to determine vessel pitch (rotation about a lateral axis) and roll (rotation about a longitudinal axis). The accelerometer(s) 44 could also be used to determine acceleration or deceleration of the marine vessel in any axis or combination of axes that occurs, for example, in response to the vessel going over waves or hitting the waterbed terrain in shallow water. The accelerometer(s) 44 may be part of the AHRS as noted above; could be part of a motion reference unit (MRU) that includes the accelerometers and MEMS angular rate gyros; could be part of an inertial measurement unit (IMU), which may have a solid state, rate gyro electronic compass that indicates the vessel heading and solid state accelerometers and angular rate sensors that sense the vessel's attitude and rate of turn; or could be standalone devices.

A user interface 46 configured to receive user inputs is also provided in signal communication with the controller 20. The user interface 46 may be a panel on the control console (helm) that includes a display screen 48, which may be a touch display, and a keypad 50. If the display screen 48 is a touch screen, it may be configured to display a number of digital buttons selectable by the user. Alternatively, the display screen 48 may display user-selectable options, and the keypad 50 may include soft key buttons for selecting the options. Alternatively, the keypad 50 may have only hard key buttons. The user interface 46 may further include a slot 52 for receiving a key to turn the system 10 on or off and to start or stop the engine 14. Another interface 54 may be provided for insertion or connection of a clip or dongle on a lanyard, or for housing a receiver configured to receive a signal from a transmitter, the purpose of which will be described further herein below.

Through research and development, the present inventor has determined that it would be desirable to limit the maximum speed at which the marine vessel can travel for a multitude of reasons. For instance, if an inexperienced boater is driving the marine vessel, a more experienced owner may want to ensure that the inexperienced boater cannot operate the vessel at speeds that require experienced handling. By way of another example, the vessel's owner may want to leave the vessel at a dock with a valet, but limit the speed of the vessel to a very slow speed to prevent mishandling and/or theft. Thus, the present inventor has developed a system 10 that allows a user to control operation of the marine propulsion device 12 to prevent the vessel speed from exceeding a maximum speed limit. The present inventor has also determined through research and development that it would be desirable to automatically change the maximum speed limit based on certain conditions being true, so as to further ensure that the vessel is operated in a manner the owner desires.

In order to accomplish the above goals, the present system 10 includes a first sensor for determining the vessel speed and in signal communication with the controller 20. The first sensor can be the GPS receiver 40 or speed sensor 42 as described herein above. The system 10 also includes a second sensor for determining a non-speed condition of the marine vessel and in signal communication with the controller 20. As will be described herein below, the second sensor can be the accelerometer(s) 44, the strain gauge 32, the GPS receiver 40, the steering sensor 28, and/or the steering sensor 36. Thus, the second sensor can be the same as the first sensor (as with the GPS receiver 40), or the second sensor can be different from the first sensor. In some examples, as in the present example, more than one sensor for determining the non-speed condition of the marine vessel is provided.

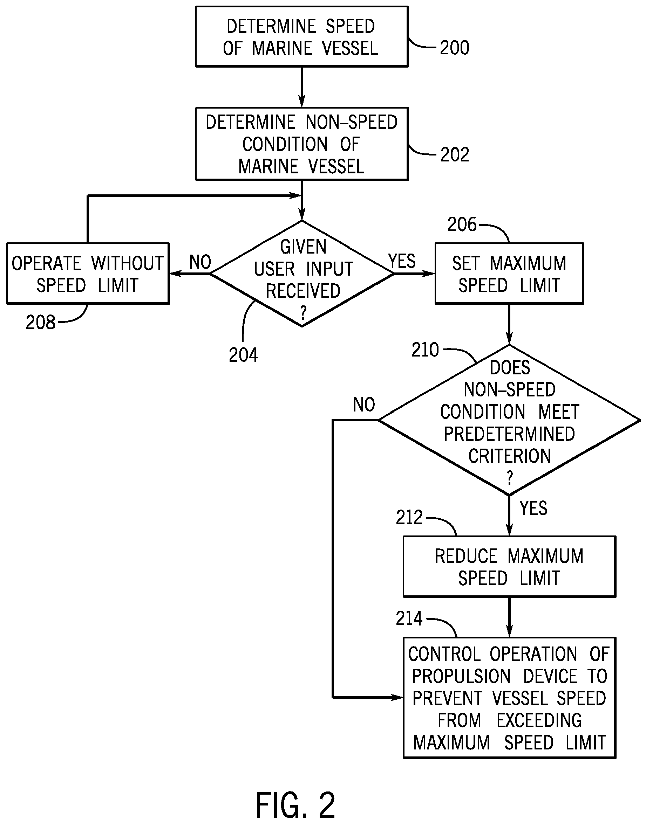

Turning to FIG. 2, a method for a marine vessel equipped with a marine propulsion device 12 that produces thrust to propel the marine vessel is described. The method is carried out by a controller 20 in signal communication with the marine propulsion device 12. As shown at 200, the method includes determining a speed of the marine vessel. As noted herein above, the controller 20 can determine the speed of the marine vessel using information from the GPS receiver 40 and/or the speed sensor 42. As shown at 202, the method includes determining a non-speed condition of the marine vessel. The non-speed condition can be measured using the accelerometer(s) 44, the strain gauge 32, the GPS receiver 40, the steering sensor 28, and/or the steering sensor 36, as noted herein above, and as will be described more fully herein below. Note that steps 200 and 202 can be performed simultaneously or in an order opposite that shown here.

Before, after or while performing steps 200 and 202, the method includes determining if a given user input is received, as shown at 204. In one example, the given user input is input via the user interface 46. According to the present disclosure, in response to the given user input from the user interface 46, the controller 20 is configured to control operation of the marine propulsion device 12 based on feedback from the first sensor (GPS receiver 40 or speed sensor 42) to prevent the vessel speed from exceeding a maximum speed limit. Thus, as shown at 206, in response to the given user input being received, the controller 20 sets a maximum speed limit. The given user input may be any type of predetermined user input. In one example, the system 10 defaults to enforcing the maximum speed limit, such that the given user input is simply the user turning a key in the slot 52 to turn on the system 10, or turning the key in the slot 52 further to start the engine 14. In another example, different users have different keys, and the controller 20 is configured to recognize the different keys and impose different predetermined maximum speed limits (or no speed limit) associated with those keys.

In another example, the given user input is the attachment or insertion of a clip on a lanyard into or onto the interface 54. Different users may have lanyards with clips that are configured to send different signals to the controller 20, such that the controller 20 can determine which type of clip is connected to the interface 54 and select a maximum speed limit or no speed limit accordingly. Similarly, the interface 54 may be a receiver, such as an RFID, NFC, Bluetooth, or other wireless receiver configured to receive a signal from a corresponding transmitter. Different users may have transmitters with different stored identification codes, such that the controller 20 can determine which type of transmitter is near the receiver and select the maximum speed limit or no speed limit accordingly. In yet another example, the interface 54 is a port for insertion of a dongle, and different users have different dongles with identification codes associated with different maximum speed limits or no speed limit stored thereon.

In another example, a user can select via a button on the touch-capable display screen 48 or keypad 50 to impose a maximum speed limit, such as by selecting from one or more predetermined maximum speed limits or entering a user-defined speed limit. Note that this example applies both to a system 10 that defaults to a non-speed-limited mode upon start-up and to a system 10 that defaults to a speed-limited mode upon start-up, in which the user can afterwards change, remove, or re-impose the maximum speed limit by making appropriate selections via the user interface 46. For example, the user interface 46 comprises a series of buttons (such as on the touch-capable display screen 48 or keypad 50) for inputting a code that allows the user to change or remove the maximum speed limit that was imposed in response to a specific key, clip, dongle, transmitter or other identification device being connected or brought in proximity to the user interface 46. In this way, the vessel may be speed-limited upon starting up of the system, such that a user without the code can only operate in the speed-limited mode. A user with the code, however, can choose to operate the vessel with a different maximum speed limit in place or in a non-speed limited mode. In another example, the slot or receiver in the user interface 46 (e.g., slot 52, interface 54) interacts with a respective key or transmitter that allows a user to change or remove the maximum speed limit that was imposed upon start-up.

In some examples, the controller 20 selects the maximum speed limit from a plurality of maximum speed limits based on the given user input. That is, the user does not define or select the maximum speed limit as noted above, but rather the speed limit is imposed based on the mere entry (or non-entry) of a particular code, insertion of a particular key, clip, or dongle, or presence of a particular transmitter. The maximum speed limits from which the controller 20 selects can be stored in the memory 24 by the vessel manufacturer or by the vessel owner in a configuration mode. For example, the memory 24 may store a higher maximum speed limit for an inexperienced boater and a lower maximum speed limit for a valet. In other examples, the maximum speed limit is associated with the dongle or transmitter on the user's input device, instead of stored in the memory 24 of the controller.

Note that the above examples of devices with which the controller 20 interacts in order to select a maximum speed limit are not limiting on the scope of the present disclosure. Those having skill in the art will recognize that other types of devices may be used to interact with the user interface 46 and signal the controller 20 what (if any) maximum speed limit should be imposed, such as a smart device having a particular application stored thereon or a programmed remote control device. Furthermore, a separate device need not be required, and the user interface 46 may instead be configured to determine via fingerprint, eye recognition, or facial recognition whether a maximum speed limit is to be imposed, and if so, which speed limit.

Returning to 204, if the given user input is not received, the method continues to 208 and the system 10 operates in a non-speed-limited mode. In other words, the user can operate the vessel at any speed up to a maximum speed limited not by the controller 20, but rather by the marine propulsion device's capabilities with respect to vessel design, vessel load, weather and/or water conditions, etc. The system 10 will continue to operate without the artificially-imposed maximum speed limit until the given user input is received.

As noted herein above, the present inventor determined that it would be helpful not only to impose a maximum speed limit based on the identity of the user, but also to reduce that maximum speed limit in the event that other conditions present would make such a reduction in the maximum speed limit desirable. Thus, according to the present disclosure, the controller 20 is configured to reduce the maximum speed limit, as shown at 212, in response to determining that a non-speed condition of the marine vessel meets a predetermined criterion, as shown at 210.

In one example, the predetermined criterion is that the marine vessel is operating in rough external conditions. For example, if the maximum speed limit is one imposed on an inexperienced boater, it may be desirable to reduce the maximum speed limit in order to ensure that the inexperienced boater is able to handle the vessel even in inclement weather or wavy conditions. For example, the system 10 may include an anemometer that measures a speed of the wind, and the controller 20 may be configured to reduce the maximum speed limit in response to the wind speed exceeding a predetermined speed. In another example, the controller 20 compares the at least one of pitch, roll, and acceleration or deceleration of the marine vessel as determined using information from the accelerometer(s) 44 to at least one of a pitch threshold, a roll threshold, and an acceleration or deceleration threshold, respectively, to determine if the marine vessel is operating in rough external conditions. In another example, the controller 20 compares the strain as measured by the strain gauge 32 to a strain threshold to determine if the marine vessel is operating in rough external conditions. Note that a strain gauge that determines a strain on a component on the marine vessel to which the strain gauge is coupled could be located anywhere that strain is likely to be indicative of rough external conditions such as wind and/or waves, and the strain gauge 32 on the transom bracket 30 is only one example of such placement. The controller 20 may be configured to reduce the maximum speed limit to a single predetermined value, to select from a plurality of reduced maximum speed limits based on the roughness information, or to determine a reduction in the maximum speed limit using an equation and the roughness information.

In another example, the predetermined criterion is that the marine vessel is operating in a particular geographical area. The controller 20 is configured to compare the vessel's geographical location as determined by the GPS receiver 40 to GIS map data to determine if the vessel is, for example, operating in a no-wake zone, near a shore, in a narrow river or channel, or in another geographical location where speed may be restricted by law or desired to be restricted by common sense. By way of another example, the controller 20 may reduce the maximum speed limit in response to determining that the depth of water in which the vessel is operating is less than a predetermined threshold depth. The controller 20 could compare the geographical position of the vessel as determined by the GPS receiver 40 to a map or database containing bathymetry data. Additionally or alternatively, the system 10 could include a SONAR depth sensor for determine the depth of the water in which the vessel is operating.

In another example, the predetermined criterion is that a requested steering position of the marine propulsion device 12 is greater than a given steering position. For example, it may be desired to reduce the maximum vessel speed when the user has requested a hard turn, in order to prevent water from splashing into the vessel or to prevent the vessel from capsizing. The requested steering position can be determined by the steering sensor 36 or the steering sensor 28, and thus may be a desired steering position or an actual steering position, respectively. The controller 20 is configured to compare the requested steering position as-measured to a predetermined threshold steering position, and to reduce the maximum speed limit if the former exceeds the latter. The controller 20 may be configured to reduce the maximum speed limit to a single predetermined value, to select from a plurality of reduced speed limits based on the steering position information, or to determine a reduction in the maximum speed limit using an equation and the steering position information.

Step 212 therefore shows that the present method includes reducing the maximum speed limit in response to determining that the non-speed condition of the marine vessel meets a predetermined criterion, after which the method continues to step 214 and includes controlling operation of the marine propulsion device 12 to prevent the vessel speed from exceeding a maximum speed limit. However, in the event that the non-speed condition does not meet the predetermined criterion at 210, the method continues directly to 214, and the initial maximum speed limit, set at 206, is used. Thus, in both instances in which the predetermined criterion is or is not met, the method includes, in response to a given user input (see step 204), controlling operation of the marine propulsion device 12 to prevent the vessel speed from exceeding a maximum speed limit (see step 214).

The maximum speed limit on the vessel can be imposed by any known manner of controlling the marine propulsion device 12. For instance, once the vessel speed reaches the maximum speed limit, the controller 20 is configured to ignore any signal from the throttle lever 38 that requests an increase in vessel speed. The controller 20 may be configured to reduce engine speed in the event that vessel speed is at or near the maximum speed limit for more than a predetermined period of time, which may suggest that a load on the engine 14 has permanently or semi-permanently decreased. For example, the controller 20 can incrementally control the throttle 18 to close and/or the fuel injectors 16 to reduce or otherwise alter fueling in order to reduce vessel speed, and determine via feedback from the GPS receiver 40 and/or speed sensor 42 whether the changes are sufficient to reduce vessel speed to the maximum speed limit. The controller 20 may be configured to ignore temporary increases in vessel speed above or near the maximum speed limit, suggesting that the load on the engine 14 has only temporarily decreased (such as if the vessel is bouncing over waves). This will prevent the system 10 from unnecessarily making changes to the throttle position and/or fuel injection timing when vessel speed is only temporarily elevated (i.e., for a few seconds). The above examples are not limiting on the present disclosure, and any known method for controlling vessel speed could be used, such as for example changing a position of a trimmable device (outboard motor, stern drive lower unit, trim tab, etc.) to increase drag and/or reduce thrust.

The present system is also able to determine when launch of the marine vessel is requested. For example, a vessel speed input device is provided for inputting commands related to the vessel speed. The vessel speed input device may be the throttle lever 38 described herein above, or may be a button selectable via the user interface 46, such as a "launch" button on the touchscreen 48 or keypad 50. The present inventor has determined that it may be desirable to control the characteristics of vessel launch in response to the same given user input being received that lead to a decrease in the maximum vessel speed. For instance, if a key/code/dongle/transmitter/etc. indicates that an inexperienced boater is operating the vessel, it may be desirable to limit the vessel to acceleration profiles with constant acceleration, polynomial acceleration, or two-phase acceleration, all of which ensure that vessel dynamics change gradually. If the key/code/dongle/transmitter/etc. indicates that an experienced user is operating the vessel, the vessel may use an exponential acceleration profile, in which speed increases rapidly at the beginning of launch and levels off as acceleration thereafter decays with time. Thus, the controller 20 may be configured to determine when launch of the marine vessel is requested via the vessel speed input device (e.g., throttle lever 38, user interface 46) and to select an acceleration profile for launch of the marine vessel based on the given user input from the user interface 46.

In the present description, certain terms have been used for brevity, clarity, and understanding. No unnecessary limitations are to be implied therefrom beyond the requirement of the prior art because such terms are used for descriptive purposes only and are intended to be broadly construed. The different systems and methods described herein may be used alone or in combination with other systems and methods. Various equivalents, alternatives, and modifications are possible within the scope of the appended claims.

The functional block diagrams, operational sequences, and flow diagrams provided in the Figures are representative of exemplary architectures, environments, and methodologies for performing novel aspects of the disclosure. While, for purposes of simplicity of explanation, the methodologies included herein may be in the form of a functional diagram, operational sequence, or flow diagram, and may be described as a series of acts, it is to be understood and appreciated that the methodologies are not limited by the order of acts, as some acts may, in accordance therewith, occur in a different order and/or concurrently with other acts from that shown and described herein. For example, those skilled in the art will understand and appreciate that a methodology can alternatively be represented as a series of interrelated states or events, such as in a state diagram. Moreover, not all acts illustrated in a methodology may be required for a novel implementation.

## Claims

1. A system (10) for a marine vessel, the system (10) comprising:
a controller (20) in signal communication with a marine propulsion device (12) and controlling operation of the marine propulsion device (12) to produce thrust to propel the marine vessel at a vessel speed;
a user interface (46) configured to receive user inputs and in signal communication with the controller (20);
a first sensor (40, 42) for determining the vessel speed and in signal communication with the controller (20);
a second sensor (28, 32, 36, 40, 44) for determining a non-speed condition of the marine vessel and in signal communication with the controller (20);
wherein, in response to a given user input from the user interface (46), the controller (20) is configured to control operation of the marine propulsion device (12) based on feedback from the first sensor (40, 42) to prevent the vessel speed from exceeding a maximum speed limit; and
wherein the controller (20) is configured to reduce the maximum speed limit in response to determining that the non-speed condition of the marine vessel meets a predetermined criterion.

2. The system of claim 1, wherein the predetermined criterion is that the marine vessel is operating in rough external conditions.

3. The system of claim 2, wherein the second sensor is an accelerometer (44) that determines at least one of pitch, roll, and acceleration or deceleration of the marine vessel, and the controller (20) compares the at least one of pitch, roll, and acceleration or deceleration to at least one of a pitch threshold, a roll threshold, and an acceleration or deceleration threshold, respectively, to determine if the marine vessel is operating in rough external conditions.

4. The system of claim 2, wherein the second sensor is a strain gauge (32) that determines a strain on a component on the marine vessel to which the strain gauge (32) is coupled, and the controller (20) compares the strain to a strain threshold to determine if the marine vessel is operating in rough external conditions.

5. The system of claim 1, wherein the second sensor is a global positioning system receiver (40), and the predetermined criterion is that the marine vessel is operating in a particular geographical area.

6. The system of claim 1, wherein the second sensor is a steering sensor (36), and the predetermined criterion is that a requested steering position of the marine propulsion device (12) is greater than a given steering position.

7. The system of any of the preceding claims, further comprising a vessel speed input device (38, 48, 50) for inputting commands related to the vessel speed and in signal communication with the controller (20);
wherein the controller (20) is configured to determine when launch of the marine vessel is requested via the vessel speed input device (38, 48, 50); and
wherein the controller (20) is configured to select an acceleration profile for launch of the marine vessel based on the given user input from the user interface (46).

8. The system of any of the preceding claims, wherein the controller (20) selects the maximum speed limit from a plurality of maximum speed limits based on the given user input.

9. A method for a marine vessel equipped with a marine propulsion device (12) that produces thrust to propel the marine vessel, the method being carried out by a controller (20) in signal communication with the marine propulsion device (12) and comprising:
determining a speed of the marine vessel;
determining a non-speed condition of the marine vessel;
in response to a given user input, controlling operation of the marine propulsion device (12) to prevent the vessel speed from exceeding a maximum speed limit; and
reducing the maximum speed limit in response to determining that the non-speed condition of the marine vessel meets a predetermined criterion.

10. The method of claim 9, wherein the predetermined criterion is that the marine vessel is operating in rough external conditions.

11. The method of claim 10, further comprising determining at least one of pitch, roll, and acceleration or deceleration of the marine vessel and comparing the at least one of pitch, roll, and acceleration or deceleration to at least one of a pitch threshold, a roll threshold, and an acceleration or deceleration threshold, respectively, to determine if the marine vessel is operating in rough external conditions.

12. The method of claim 10, further comprising determining a strain on a component on the marine vessel and comparing the strain to a strain threshold to determine if the marine vessel is operating in rough external conditions.

13. The method of claim 9, further comprising determining a geographical position of the marine vessel, wherein the predetermined criterion is that the marine vessel is operating in a particular geographical area.

14. The method of claim 9, further comprising determining a requested steering position of the marine propulsion device (12), wherein the predetermined criterion is that the requested steering position is greater than a given steering position.

15. The method of any of the preceding claims, further comprising determining when launch of the marine vessel is requested; and
selecting an acceleration profile for launch of the marine vessel based on the given user input.
